# EUROPÄISCHE PATENTANMELDUNG

(11) **EP 4 679 636 A1**
(43) Veröffentlichungstag der Anmeldung: **14.01.2026**
(21) Anmeldenummer: 25306084.2
(22) Anmeldetag: 09.07.2025
(51) Int. Cl.: H01R 4/02, H01R 43/02

(54) **VERFAHREN UND VORRICHTUNG ZUR HERSTELLUNG EINER REIBSCHWEISSVERBINDUNG UND DAMIT HERGESTELLTE ELEKTRISCHE ANORDNUNG**

(30) Priorität: 12.07.2024 DE 102024119869
(71) Anmelder: Nexans, 92400 Courbevoie (FR)
(72) Erfinder: DÖLLINGER, Ulrich, 92400 Courbevoie (FR); STEINBERG, Helmut, 92400 Courbevoie (FR)
(74) Vertreter: Ipsilon

(57) **Zusammenfassung**

Es wird ein Verfahren zur Herstellung einer Reibschweißverbindung von zwei elektrischen Leitern mittels eines Verbindungszylinders vorgeschlagen. Zu diesem Zweck werden die elektrischen Leiter auf Kontaktflächen des Verbindungszylinders (103) gedrückt, der in Rotation versetzt wird. Weiterhin wird eine elektrische Anordnung vorgeschlagen, die gemäß dem genannten Verfahren hergestellt ist, sowie eine Vorrichtung, die zur Durchführung des Verfahrens geeignet ist.

## Beschreibung

### Gebiet

Die Erfindung betrifft ein Verfahren zur Herstellung einer Verbindung zwischen zwei elektrischen Leitern sowie eine Vorrichtung zur Herstellung einer solchen Verbindung.

### Hintergrund

Bei rein elektrisch oder hybrid angetriebenen Fahrzeugen werden für das Laden einer Fahrzeugbatterie und für den Antrieb eines oder mehrerer Fahrmotoren große Stromstärken in der Größenordnung von bis zu 300 A übertragen. Für die Übertragung dieser großen Stromstärken werden häufig Stromschienen mit einem massiven Leiter eingesetzt. Beispielsweise führen Stromschienen von einer Ladedose an einem elektrisch angetriebenen Fahrzeug zu einer im unteren Bereich des Fahrzeugs angeordneten aufladbaren Batterie. Damit die Ladedose für einen Benutzer des Fahrzeuges beim Verbinden mit einem Ladekabel komfortabel zugänglich ist, ist die Ladedose in einer Höhe von ungefähr 1 m angeordnet, während die Batterie auf einem tieferen Niveau auf Höhe des Fahrzeugbodens angeordnet ist. Der Höhenunterschied zwischen Ladedose und Batterie macht häufig eine 3-dimensionale Formung von Stromschienen erforderlich. Eine dreidimensional geformte Stromschiene kann in vielen Fällen nicht mehr durch Reibschweißen mit einem mit einem zweiten Verbindungspartner verschweißt werden, weil es in der Regel unmöglich ist, eines der beiden zu verbindenden Teile, nämlich Stromschiene und Verbindungspartner, zu rotieren. Ähnliche Schwierigkeiten treten bei Stromschienen auf, welche die Fahrzeugbatterie mit einem oder mehreren Fahrmotoren verbinden. Herkömmlicherweise wird dieses Problem dadurch gelöst, dass an den Enden der Stromschienen Schraub- oder Steckkontakte angeordnet sind, die miteinander verbunden werden. Die Verbindungsstelle ist außerdem von einem Gehäuse umschlossen, das die Verbindungsstelle vor Umwelteinflüssen schützt.

Hiervon ausgehend hat die vorliegende Erfindung die Aufgabe, ein Verfahren zur Herstellung einer Verbindung zwischen zwei elektrischen Leitern sowie eine Vorrichtung zur Durchführung des Verfahrens vorzuschlagen, um eines oder mehrere der eingangs genannten Probleme zu überwinden oder zumindest zu verbessern.

### Beschreibung der Erfindung

Zur Lösung dieser Aufgabe schlägt die Erfindung nach einem ersten Aspekt ein Verfahren zur Verbindung von zwei elektrischen Leitern mittels eines Verbindungszylinders vor, der zwei Grundflächen und eine Mantelfläche aufweist. Das Verfahren umfasst
- Andrücken der elektrischen Leiter an jeweils eine Kontaktfläche des Verbindungszylinders, wobei die Flächennormalen der Kontaktflächen parallel zur Symmetrieachse des Verbindungszylinders orientiert sind;
- Rotieren des Verbindungszylinders bis der Verbindungszylinder mit den elektrischen Leitern eine stoffschlüssige Verbindung eingeht, insbesondere eine Reibschweißverbindung; und
- Beenden der Rotation des Verbindungszylinders.

Das vorgeschlagene Verfahren zeichnet sich dadurch aus, dass ein Verbindungszylinder zwischen zwei zu verbindenden Partnern eingefügt ist. Das vorgeschlagene Verfahren ist deshalb insbesondere in Anwendungsfällen vorteilhaft, wenn es nicht möglich ist, einen der beiden Verbindungspartner zu rotieren. Ein konkreter Anwendungsfall ist zum Beispiel die Verbindung von Stromschienen in einem Elektrofahrzeug. Die Stromschienen weisen in einem Elektrofahrzeug häufig eine 3-dimensionale Form zur Anpassung an einen gegebenen Verlegeweg auf.

Gemäß einer vorteilhaften Weiterbildung umfasst das Verfahren es Verfahrens
- Anlegen von zwei Stützrollen an den Verbindungszylinder;
- Anlegen einer Andruckrolle an den Verbindungszylinder, sodass der Verbindungszylinder gegen die Stützrollen gedrückt wird;
- Antreiben der Andruck- und/oder die Stützrollen, um den Verbindungszylinder in Rotation zu versetzen;
- Anhalten der angetriebenen Andruck- und/oder Stützrollen, um eine Reibschweißverbindung zwischen dem Verbindungszylinder und den elektrischen Leitern herzustellen.

Mit der Kombination aus Andruck- und Stützrollen ist die Rotation des Verbindungszylinders auf einfache Weise realisierbar.

Zweckmäßigerweise kann das Verfahren weiterhin umfassen
- Abheben der Andruckrolle von dem Verbindungszylinder; und
- Entfernen der Stützrollen von dem Verbindungszylinder.

Nach dem das Entfernen der Andruck- bzw. Stützrollen von dem Verbindungszylinder ist es möglich, eine Vorrichtung, die Herstellung eingesetzt wurde, zu entfernen.

Nach einem zweiten Aspekt wird eine elektrische Anordnung mit zwei elektrischen Leitern vorgeschlagen, die jeweils mittels einer Reibschweißverbindung mit einem Verbindungszylinder verbunden sind.

Der Verbindungszylinder ist rotierbar, sodass eine Reibschweißverbindung jeweils zu einem der elektrischen Leiter realisierbar ist. Auf diese Weise können elektrische Leiter auf einfache Weise miteinander verbunden werden, auch wenn diese Leiter nicht rotierbar sind, zum Beispiel, wenn es sich um Stromschienen handelt.

Bei einer zweckmäßigen Weiterbildung ist der Verbindungszylinder als massiver Vollzylinder ausgebildet.

Bei einem vorteilhaften Ausführungsbeispiel weisen die elektrischen Leiter einen rechteckigen Querschnitt auf, wobei der Durchmesser des Verbindungszylinders so gewählt ist, dass die Grundflächen des Verbindungszylinders jeweils die gesamte stirnseitige Querschnittsfläche der beiden Leiter aufnehmen. Durch diese Wahl der Dimensionierung ist sichergestellt, dass der gesamte Leiterquerschnitt für den Stromtransport genutzt wird.

Bei einem alternativen Ausführungsbeispiel weist der Verbindungszylinder in mindestens einer seiner Grundflächen eine zentrierte Sackbohrung auf.

Wenn der Verbindungszylinder nur eine Sackbohrung aufweist, dann bildet der Boden dieser Sackbohrung eine Kontaktfläche für einen Leiter, der in diese Sackbohrung einführbar ist. Der Querschnitt dieses Leiters könnte sowohl kreisförmig als auch rechteckig sein. Entscheidend ist nur, dass der Leiter mit dem Boden der Sackbohrung in Reibkontakt bringbar ist. In Ausführungsformen mit zwei Sackbohrungen, die in jeweils einer der Grundflächen des Verbindungszylinders angeordnet sind, sind die Sackbohrungen durch eine Trennwand voneinander getrennt. Die beiden Seiten der Trennwand bilden jeweils eine Kontaktfläche für die eingesteckten elektrischen Leiter. Ein Verbindungszylinder mit zwei Sackbohrungen wird im Folgenden auch als Verbindungshülse bezeichnet. Die Verbindungshülse ist im Vergleich zu einem Verbindungszylinder mit nur einer oder gar keiner Sackbohrung einfacher auf den Leitern zu zentrieren.

Bei einer zweckmäßigen Ausführungsform hat mindestens einer der beiden Leiter eine kreisförmige Querschnittsfläche hat, und wobei der mindestens eine Leiter als massiver Leiter oder als Litzenleiter ausgebildet ist.

Gemäß dieser Ausführungsform der elektrischen Anordnung ist es beispielsweise auch möglich, dass eine Stromschiene mit einem massiven Leiter, der einen kreisförmigen oder rechteckigen Querschnitt aufweist, mit einem runden Litzenleiter verschweißt wird. Der Litzenleiter ist mechanisch flexibel und weist Vorteile bei der Montage und bei Anwendungsfällen auf, in denen sich mit der Stromschiene verbundene Komponenten zumindest geringfügig relativ zueinander bewegen, wie es beispielsweise bei einem Antriebsmotor in einem Elektrofahrzeug der Fall ist.

Gemäß einem dritten Aspekt der Erfindung wird eine Vorrichtung zur Rotation eines Verbindungszylinders vorgeschlagen, um zwei elektrische Leiter jeweils mit dem Verbindungszylinder zu verbinden. Die Vorrichtung weist zwei Stützrollen und eine mit einem Aktuator verstellbare Andruckrolle auf. Die Andruckrolle und/oder die Stützrollen sind antreibbar, um sie in Rotation zu versetzen.

In einem vorteilhaften Ausführungsbeispiel ist die Vorrichtung auf einem Roboterarm angeordnet, um sie bei bereits in einem Fahrzeug oder einer Anlage montierten Stromschienen an die Verbindungsstelle der Stromschienen zu bringen.

Bei einer zweckmäßigen Weiterbildung kann die Vorrichtung Haltemittel für die elektrischen Leiter aufweisen, die dazu eingerichtet sind, die elektrischen Leiter gegen Kontaktflächen des Verbindungszylinders zu drücken.

Die Haltemittel erzeugen eine Vorschubkraft, welche die elektrischen Leiter gegen Kontaktflächen des Verbindungszylinders, um eine Reibschweißung der Stromschienen mit dem Verbindungszylinder zu bewirken.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine perspektivische Ansicht von zwei miteinander verbundenen elektrischen Leitungen;
- Fig. 2: eine Querschnittsansicht der elektrischen Leitungen aus Figur 1;
- Fig. 3: eine Querschnittsansicht von elektrischen Leitungen, die mittels eines Vollzylinders verbunden sind;
- Fig. 4A: eine perspektivische stark schematisierte Darstellung einer Vorrichtung zur Herstellung einer Verbindung zwischen zwei elektrischen Leitern;
- Fig. 4B,C: eine Querschnittsansicht der Vorrichtung aus Figur 4A in einer Ladestellung bzw. Arbeitsstellung; und
- Fig. 5A,5B: eine Vorrichtung zur Herstellung einer Reibschweißverbindung gemäß der vorliegenden Erfindung.

Gleiche oder ähnliche Elemente sind in den Figuren mit gleichen oder ähnlichen Bezugszeichen versehen.

### Ausführungsbeispiel

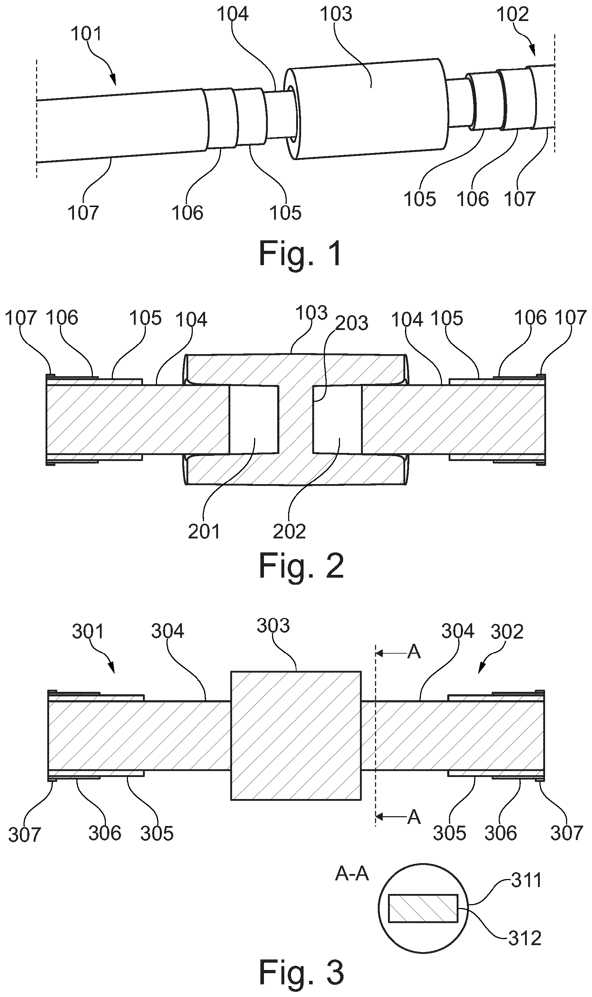

Figur 1 zeigt eine perspektivische Ansicht einer elektrischen Anordnung 100 mit zwei elektrischen Leitungen 101,102, die mit einer Verbindungshülse 103 miteinander verbunden sind. Die elektrischen Leitungen 101,102 sind identisch aufgebaut und weisen einen Leiter 104, eine innere Isolation 105, einen Schirm 106 sowie einen äußeren Mantel 107 auf. Bei einem Ausführungsbeispiel beträgt der Querschnitt des Leiters 95 mm². Bei anderen Ausführungsbeispielen kann der Querschnitt aber auch größer oder kleiner als 95 mm² sein. Die axiale Länge der Verbindungshülse 103 beträgt zum Beispiel 40-50 mm. Die Absetzlänge des Leiters 104 entspricht ungefähr der Hälfte der axialen Länge der Verbindungshülse 103, wohingegen die Absetzlängen von innerer Isolation 105, Schirm 106 und äußeren Mantel 107 wesentlich kürzer sind und in Figur 1 nur zur besseren Veranschaulichung übertrieben dargestellt sind.

Figur 2 zeigt die zylinderförmige Verbindungshülse 103 im Querschnitt. Die Verbindungshülse 103 weist zwei Sackbohrungen 201,202 auf, in welche die Leitungen 101, 102 noch nicht noch nicht vollständig eingesteckt sind, um den strukturellen Aufbau der Verbindungshülse 103 zeichnerisch besser darstellen zu können. Die Sackbohrungen sind durch eine Trennwand 203 voneinander getrennt. Zur Herstellung einer stoffschlüssigen Verbindung zwischen den Leitern 104 der Leitungen 101, 102 werden die Leiter 104 vollständig in die Verbindungshülse eingesteckt, bis deren stirnseitiges Ende jeweils an der Trennwand 203 anliegt. Um die Leiter 104 mit der Verbindungshülse 103 zu verschweißen, wird die Verbindungshülse 103 in Rotation versetzt bis das Material der Leiter 104 und der Verbindungshülse 103 einen fließfähigen Zustand erreichen und einander durchdringen. Sobald dieser Zustand erreicht ist, stoppt die Rotation der Verbindungshülse 103 wodurch eine feste Schweißverbindung zwischen der Verbindungshülse 103 und den Leitern 104 entsteht. Die so entstehende Reibschweißverbindung ist unabhängig von dem Material aus welchem Leiter und Verbindungshülse bestehen. In den meisten Fällen kommt hierfür Kupfer oder Aluminium zum Einsatz, wobei die Schweißverbindung auch mit beliebigen Materialkombinationen realisierbar ist. Hierfür müssen lediglich die Parameter Rotation Geschwindigkeit, Rotationsdauer und Einpressdruck der Leiter 104 angepasst werden.

Die Leiter 104 können hierbei massiver Leiter oder als Litzenleiter ausgebildet sein. Massive Leiter haben Vorteile bei der Stromübertragung, während Litzenleiter durch ihre mechanische Flexibilität zum Beispiel beim Anschluss an eine Batterieklemme oder eine Klemme an einem Antriebsmotor vorteilhaft sind. Die vorgeschlagene Verbindungstechnik zwischen massiven Leitern und Litzenleitern ist kostengünstig und erweitert den Einsatz von Stromschienen mit einem massiven Leiter in Anwendungsfällen, in denen die mechanische Flexibilität eines Litzenleiters bei der Montage oder im Betrieb gewünscht oder erforderlich ist.

Bei den beschriebenen Ausführungsbeispielen haben die elektrischen Leiter einen runden Querschnitt. Mit einer in Figur 3 dargestellten abgewandelten Ausführungsform können auch andere Stromschienen mit beliebigen Leiterquerschnitten verbunden werden, insbesondere Stromschienen mit einem rechteckigen Leiterquerschnitt, die für bestimmte Anwendungsfälle Vorteile bei der Installation gegenüber runden Leiter Querschnitten haben.

Figur 3 zeigt eine Querschnittsansicht zweier elektrischer Leitungen 301,302, die mit einem Verbindungszylinder 303 miteinander verbunden sind. Die elektrischen Leitungen 301,302 weisen rechteckige Leiter 304, eine innere Isolation 305, einen Schirm 306 sowie einen äußeren Mantel 307 auf. Die Leiter 304 werden mit ihren abisolierten Enden stumpf auf die Grundflächen 308,309 des Verbindungszylinders 303 aufgesetzt. Der Durchmesser des Verbindungszylinders 303 ist dabei so gewählt, dass beide Leiter 304 mit ihrer gesamten stirnseitigen Querschnittsfläche auf jeweils der Grundfläche des Verbindungszylinders 103 stehen. Eine Einblendung in Figur 3 zeigt einen Schnitt entlang der Linie A-A, in der mit einem Kreis 311 die Grundfläche des Verbindungszylinders 303 an und mit einem Rechteck 312 die Querschnittsfläche eines Leiters 304 dargestellt. In Fällen, bei denen elektrische Leitungen 301,302 mit unterschiedlichen Leiterquerschnitten benutzt werden, orientiert sich der Durchmesser des Verbindungszylinders 303 an dem größeren Leiterquerschnitt. Der Verbindungszylinder 303 wird in Rotation versetzt und nach Ablauf einer vorbestimmten Zeitspanne angehalten. Dabei kommt es zu einer Reibschweißverbindung zwischen dem Verbindungszylinder 303 und den Leitern 304. Selbstverständlich können mit einem Verbindungszylinder 303 auch Leiter mit einem kreisförmigen Querschnitt verbunden werden. Allerdings ist eine Verbindungshülse 103 auf den zu verbindenden Leitern einfacher zu zentrieren als ein Verbindungszylinder 303, der als Vollzylinder ausgebildet ist.

Bei einem weiteren in der Zeichnung nicht dargestellten Ausführungsbeispiel weist ein Verbindungszylinder nicht zwei, sondern nur ein Sackloch in einer seiner Grundflächen auf, um einen Leiter aufzunehmen. In das Sackloch können Leiter sowohl mit kreisförmigem als auch rechteckigen Querschnitt aufgenommen sein. Dieser Verbindungszylinder lässt sich auch etwas einfacher zentrieren wie ein Vollzylinder, wenn auch nicht so gut wie eine Verbindungshülse 103.

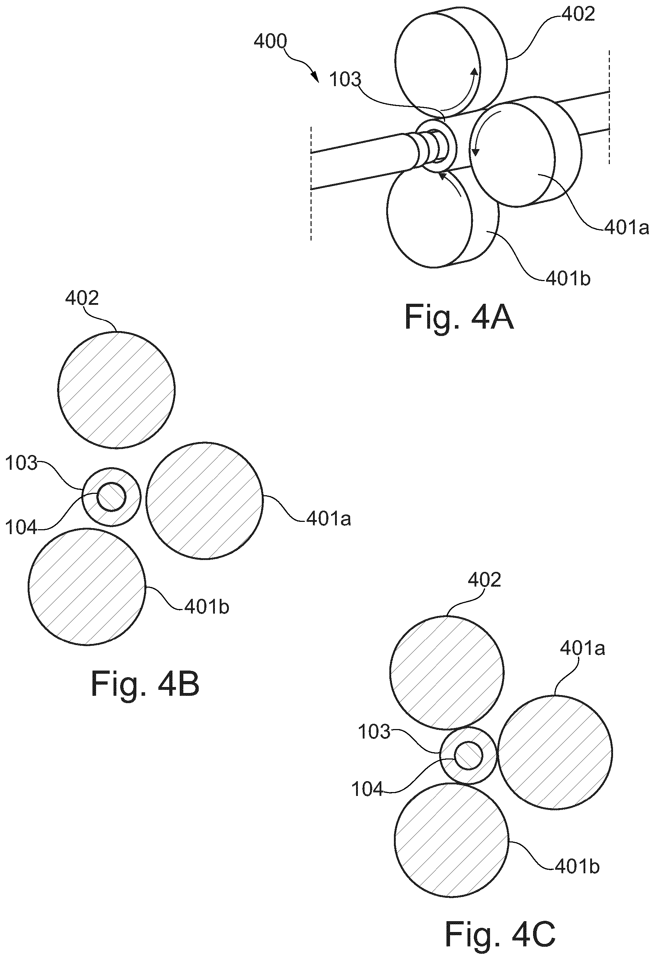

Figur 4A zeigt in einer perspektivischen Darstellung eine Vorrichtung 400, die mittels angetriebenen Stützrollen 401a,401b und einer Andruckrolle 402 die Verbindungshülse 103 in Rotation versetzt. Die Lagerung und der Antrieb der Stütz- und Andruckrollen sind der Übersichtlichkeit halber weggelassen.

In Figur 4B ist in einer Querschnittsansicht eine Anfangsphase bei der Herstellung der reif Schweißverbindung zwischen der Verbindungshülse 103 und den Leitern 104 der Leitungen bzw. Stromschienen 101,102 gezeigt. Die Andruckrolle 402 ist mittels eines Aktuators (nicht gezeigt) in eine geöffnete Ladestellung verfahren, so dass die Leitungen 101,102 zwischen den Andruck- und Stützrollen platzierbar ist. Danach wird die Andruckrolle 402 in eine geschlossene Arbeitsstellung verfahren, wie es in Figur 4C gezeigt ist. In der Arbeitsstellung liegen die Andruck- und Stützrollen 402,401a,401b auf dem Außenumfang der Verbindungshülse 103 an und die angetriebenen Stützrollen 401a,401b versetzen die Verbindungshülse 103 in Rotation, um in der beschriebenen Art und Weise eine Reibschweißverbindung zwischen den Leitern 104 der Leitungen 101,102 und der Verbindungshülse 103 herzustellen.

Sobald die Reibschweißverbindungen hergestellt sind, fährt die Andruckrolle 402 wieder in die in Figur 4B gezeigte geöffnete Ladestellung zurück und die Vorrichtung 400 wird von der Verbindungsstelle entfernt.

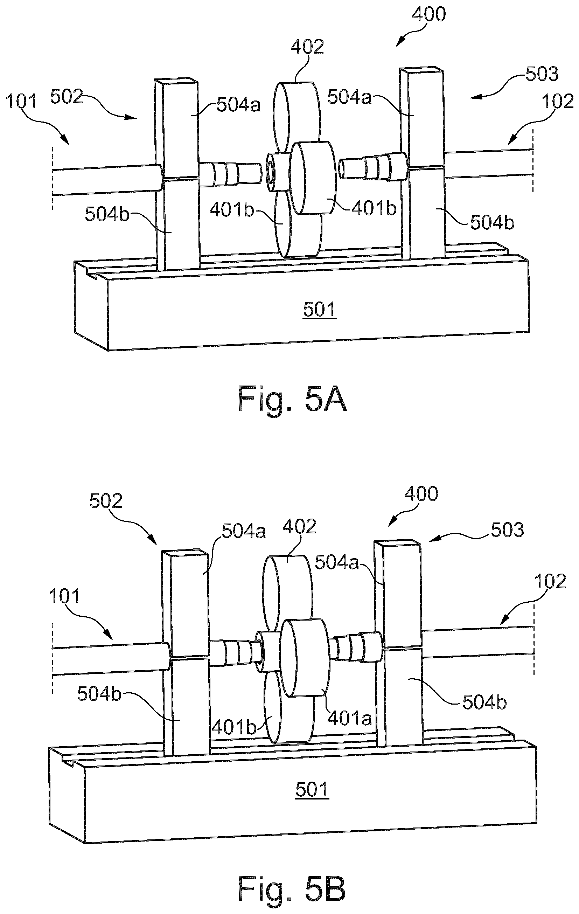

In Figur 5A ist in einer schematischen Darstellung ein weiterer Aspekt der Vorrichtung 400 gezeigt. Die Stütz- und Andruckrollen 401a,b,402 sind in dieser Darstellung bereits in Arbeitsstellung. Die Vorrichtung verfügt über ein Bett 501, in welchem Spannmittel 502,503 in longitudinaler Richtung verfahrbar sind. Die Spannmittel 502,503 verfügen jeweils über zwei Spannbacken 504a, 504b zwischen denen die Leitung 101 bzw. 102 eingespannt sind. Die beiden Spannmittel 502,503 werden dann aufeinander zu verfahren bis die Leiter 104 der Leitungen 101 bzw. 102 an eine Kontaktfläche der Verbindungshülse 103 anschlagen. Dieser Zustand ist in Figur 5B gezeigt. Dann werden die Stützrollen 401a,401b in Rotation versetzt, um die Reibschweißverbindungen zwischen der Verbindungshülse 103 und den Leitern 104 herzustellen, wie es bereits weiter oben beschrieben worden ist.

Das Bett 501 ist bei einem Ausführungsbeispiel auf einen Roboterarm montiert, sodass die Vorrichtung zur Herstellung der Reibschweißverbindungen bei der Montage von elektrischen Anlagen oder Elektrofahrzeugen auf einfache Weise an die Stelle bringbar ist, wo die Reibschweißverbindungen hergestellt werden sollen.

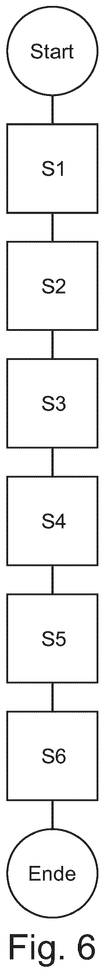

Schließlich ist in Figur 6 ein Flussdiagramm zur Herstellung einer Reibschweißverbindung zwischen zwei Leitern gemäß dem erfindungsgemäßen Verfahren gezeigt. In einem ersten Schritt S1 werden zwei elektrische Leiter an jeweils eine Kontaktfläche eines Verbindungszylinders angedrückt. In Schritt S2 werden die zwei Stützrollen 401a,b an den Verbindungszylinder angelegt. Danach wird in einem Schritt S3 wird die Andruckrolle 402 gegen die Verbindungshülse 103 gedrückt. Anschließend werden in Schritt S4 die Andruck- und/oder Stützrollen angetrieben und dadurch in Rotation versetzt. Anschließend werden in Schritt S5 die angetriebenen Andruck- und/oder Stützrollen angehalten und in Schritt S6 von der Verbindungshülse 103 entfernt. Das Verfahren wird in gleicher Weise durchgeführt, wenn an Stelle der Verbindungshülse 103 ein Verbindungszylinder ohne oder mit einem Sackloch oder mit zwei Sacklöchern verwendet wird.

Obwohl die Erfindung mit Bezug auf Stromschienen beschrieben wurde, die ihn elektrischen Fahrzeugen verbaut sind, ist die Erfindung nicht auf diese Anwendungsart beschränkt, sondern kann vielmehr in allen Arten von elektrischen Anlagen verwendet werden, wo Stromschienen miteinander zu verbinden sind.

### Bezugszeichenliste

- 100: Elektrische Anordnung
- 101,102: Elektrische Leitung
- 103: Verbindungshülse
- 104: Leiter
- 105: innere Isolation
- 106: Schirm
- 107: äußeren Mantel
- 201,202: Sackbohrung
- 203: Trennwand

- 301,302: Elektrische Leitung
- 303: Verbindungszylinder
- 304: Leiter
- 305: innere Isolation
- 306: Schirm
- 307: äußeren Mantel
- 308,309: Grundflächen

- 311: Kreis
- 312: Rechteck

- 400: Vorrichtung
- 401a,b: Stützrollen
- 402: Andruckrolle

- 501: Bett
- 502,503: Spannmittel
- 504a,b: Spannbacken

## Patentansprüche

1. Verfahren zur Verbindung von zwei elektrischen Leitern mittels eines Verbindungszylinders (103,303), der zwei Grundflächen und eine Mantelfläche aufweist, wobei das Verfahren umfasst
- Andrücken der elektrischen Leiter (104,304) an jeweils eine Kontaktfläche des Verbindungszylinders, wobei die Flächennormalen der Kontaktflächen (308,309) parallel zur Symmetrieachse des Verbindungszylinders (103,303) orientiert sind;
- Rotieren des Verbindungszylinders bis der Verbindungszylinder mit den elektrischen Leitern (104,304) eine stoffschlüssige Verbindung eingeht, insbesondere eine Reibschweißverbindung; und
- Beenden der Rotation des Verbindungszylinders.

2. Verfahren nach Anspruch 1, wobei das Verfahren weiterhin umfasst
- Anlegen von zwei Stützrollen (401a,b) an den Verbindungszylinder;
- Anlegen einer Andruckrolle (402) an den Verbindungszylinder (103,303), sodass der Verbindungszylinder gegen die Stützrollen gedrückt wird;
- Antreiben der Andruck- und/oder die Stützrollen (401a,b, 402), um den Verbindungszylinder in Rotation zu versetzen;
- Anhalten der angetriebenen Andruck- und/oder Stützrollen, um eine Reibschweißverbindung zwischen dem Verbindungszylinder und den elektrischen Leitern herzustellen.

3. Verfahren nach Anspruch 1 und 2, wobei das Verfahren weiterhin umfasst
- Abheben der Andruckrolle (402) von dem Verbindungszylinder (103,303); und
- Entfernen der Stützrollen (401 a,b) von dem Verbindungszylinder.

4. Elektrische Anordnung (100) mit zwei elektrischen Leitern (104,304), die jeweils mittels einer Reibschweißverbindung mit einem Verbindungszylinder (103,303) verbunden sind.

5. Elektrische Anordnung nach Anspruch 4, wobei der Verbindungszylinder als massiver Vollzylinder (303) ausgebildet ist.

6. Elektrische Anordnung nach Anspruch 5, wobei die elektrischen Leiter (304) einen rechteckigen Querschnitt (312) aufweisen, wobei der Durchmesser des Verbindungszylinders so gewählt ist, dass die Grundflächen des Verbindungszylinders jeweils die gesamte stirnseitige Querschnittsfläche der beiden Leiter aufnehmen.

7. Elektrische Anordnung nach Anspruch 4, wobei der Verbindungszylinder (103,303) in mindestens einer seiner Grundflächen eine zentrierte Sackbohrung (201,202) aufweist.

8. Elektrische Anordnung nach einem der Ansprüche 4-7, wobei mindestens einer der beiden Leiter (104,304) eine kreisförmige Querschnittsfläche hat, und wobei der mindestens eine Leiter als massiver Leiter oder als Litzenleiter ausgebildet ist.

9. Vorrichtung zur Rotation eines Verbindungszylinders, um zwei elektrische Leiter jeweils mit dem Verbindungszylinder zu verbinden, wobei die Vorrichtung zwei Stützrollen (401a,b) und einen mit einem Aktuator verstellbare Andruckrolle (402) aufweist und wobei die Andruckrolle und/oder die Stützrollen antreibbar sind, um sie in Rotation zu versetzen.

10. Vorrichtung nach Anspruch 9, **dadurch gekennzeichnet, dass** die Vorrichtung Haltemittel (502,503,504a,b) für die elektrischen Leiter aufweist, die dazu eingerichtet sind, die elektrischen Leiter gegen Kontaktflächen des Verbindungszylinders zu drücken.
